# EUROPÄISCHE PATENTSCHRIFT

(11) **EP 1 522 798 B1**
(45) Veröffentlichungstag und Bekanntmachung des Hinweises auf die Patenterteilung: **12.03.2008**
(21) Anmeldenummer: 04405623.2
(22) Anmeldetag: 05.10.2004
(51) Int. Cl.: F24F 6/04

(54) **Verdunstervorrichtung mit mindestens einem Keramikmodul**
Humidifying device with ceramic device
Dispositif d'humidification avec un module en céramique

(30) Priorität: 09.10.2003 CH 17232003
(43) Veröffentlichungstag der Anmeldung: 13.04.2005
(73) Patentinhaber: Axair AG, 8808 Pfäffikon SZ (CH)
(72) Erfinder: Aepli, Michael, 8646 Wagen (CH); Wulz, Helmut, 8907 Wettswill (CH)
(74) Vertreter: Bollhalder, Renato

(56) Entgegenhaltungen:
- CH-A- 687 417
- DE-U- 20 305 087
- US-A- 2 236 538
- PATENT ABSTRACTS OF JAPAN Bd. 1998, Nr. 03, 27. Februar 1998 (1998-02-27) -& JP 09 292137 A (AISIN SEIKI CO LTD), 11. November 1997 (1997-11-11)

## Beschreibung

Die vorliegende Erfindung bezieht sich auf eine Verdunstervorrichtung zur Befeuchtung eines durch eine Befeuchtungsstrecke strömenden Luftstroms mit mindestens einem Keramikmodul gemäss dem Oberbegriff des unabhängigen Patentanspruchs 1.

Keramikmodule zur Befeuchtung eines Luftstroms sind in Form von Keramikplatten an sich bekannt und kommen beispielsweise in Luftbefeuchtern bereits zum Einsatz. In einem Luftbefeuchter wird einem Luftstrom eine Befeuchtungsflüssigkeit - beispielsweise Wasser - zugeführt. Die Zufuhr des Wassers erfolgt häufig mit Hilfe einer Zerstäubereinheit mit mehreren Düsen, wobei die einzelnen Düsen der Zerstäubereinheit feine Wassertröpfchen in den Luftstrom sprühen. Im Luftstrom verdunstet ein Teil der Wassertröpfchen - sie werden somit in die Luft aufgenommen, wodurch diese befeuchtet wird.

Es verdunsten jedoch nicht alle Tröpfchen, die in den Luftstrom hinein gesprüht werden, sodass noch Tröpfchen im Luftstrom verbleiben. Aus hygienischen Gründen (z.B. Keime in den Tröpfchen) ist es daher im Allgemeinen notwendig, am Ende der Befeuchtungsstrecke einen den Strömungsquerschnitt ausfüllenden Tröpfchenabscheider anzuordnen, z.B. aus Wirrfaservlies, um zu verhindern, dass Aerosole in den nachfolgenden Luftkanalabschnitt gelangen können.

Keramikplatten kommen nun ebenfalls als Tröpfchenabscheider zum Einsatz, wobei sie nicht nur als Tröpfchenabscheider wirken, sondern auch als Sekundärbefeuchter (Verdunstungsvorrichtung). Tröpfchen, die zunächst aus dem Luftstrom auf den Wandungen der offenporigen Keramikplatte abgeschieden werden, können später wieder im Luftstrom, der durch die offenporige Keramikplatte strömt, verdunstet werden und diesen befeuchten. Die Abwassermenge ist daher bei solchen Luftbefeuchtern insgesamt geringer, weil mindestens ein Teil der zuvor abgeschiedenen Tröpfchen später wieder verdunstet und somit nicht als Abwasser anfällt.

Wie beispielsweise in der DE 203 05 087 U offenbart, werden die Keramikplatten vorzugsweise V-förmig angeordnet, um dem Luftstrom eine grosse zu durchströmende Oberfläche zu bieten und einen geringeren Luftwiderstand zu haben. Die Keramikplatten sind dabei beispielsweise von Rahmenteilen umgeben und werden durch Vertikalträger gehalten, an denen die Stirnflächen oder die Endflächen der V-förmig angeordneten Keramikplatten angebracht sind. Diese Vertikalträger und Rahmenteile, die z.B. aus Metall oder Kunststoff sind, behindern jedoch den die Keramikplatten durchströmenden Luftstrom und bewirken eine inhomogene Befeuchtung des Luftstroms. Ausserdem ist die V-förmige Anordnung der Keramikplatten konstruktiv aufwendig.

Der vorliegenden Erfindung liegt daher die Aufgabe zugrunde, eine Verdunstervorrichtung zu schaffen, die eine homogenere Luftbefeuchtung ermöglicht und ausserdem vorzugsweise eine einfachere Konstruktion aufweist. Darüber hinaus soll vorzugsweise erreicht werden, dass der Luftwiderstand über die Keramikmodule möglichst klein wird.

Diese Aufgabe wird durch die erfindungsgemässe Verdunstervorrichtung gelöst, wie sie im unabhängigen Patentanspruch 1 definiert ist. Bevorzugte Ausführungsvarianten ergeben sich aus den abhängigen Patentansprüchen.

Das Wesen der Erfindung besteht im Folgenden: Eine Verdunstervorrichtung zur Befeuchtung eines durch eine Befeuchtungsstrecke strömenden Luftstroms erstreckt sich zumindest grösstenteils über den Strömungsquerschnitt der Befeuchtungsstrecke. Die Verdunstervorrichtung weist mindestens ein Keramikmodul zur Befeuchtung des Luftstroms mit einer Befeuchtungsflüssigkeit auf, das aus einer offenporigen Struktur aus porösen Keramikwandungen besteht. Das mindestens eine Keramikmodul umfasst plattenartige, ineinander übergehende Modulabschnitte, die jeweils eine offenporige Struktur aus porösen Keramikwandungen aufweisen und die dreidimensional, d.h. nicht alle in der gleichen Ebene, angeordnet sind.

Durch diese dreidimensionale Anordnung der plattenartigen Modulabschnitte wird die bei der Befeuchtung einem Luftstrom ausgesetzte Oberfläche des Keramikmoduls im Vergleich zu einer Keramikplatte massgeblich vergrössert, während der Luftwiderstand verkleinert wird. Mehrere solche Keramikmodule können in einer Ebene neben- und übereinander angeordnet werden und brauchen nicht V-förmig montiert zu werden, wie die bekannten Keramikplatten. Die die Oberfläche vergrössernde Dreidimensionalität steckt in den Keramikmodulen selbst und ergibt sich nicht erst aus deren Anordnung, was die Konstruktion von Keramikmodule enthaltenden Verdunstervorrichtungen vereinfacht.

Ausserdem kann bei den Keramikmodulen der erfindungsgemässen Verdunstervorrichtung auf Rahmenteile weitgehend verzichtet werden. Insbesondere sind die Endflächen oder - je nach Anordnung der Keramikmodule - Stirnflächen der Keramikmodule rahmenteilfrei.

Bevorzugt sind mindestens einige der Modulabschnitte so angeordnet, dass sich das mindestens eine Keramikmodul zu einer Seite hin verjüngt. Auf diese Weise kann ein optimaler Luftstrom durch die Keramikmodule erreicht werden.

Mit Vorteil sind mindestens einige der Modulabschnitte des mindestens einen Keramikmoduls pyramiden-, pyramidenstumpf-, kegel- oder kegelstumpfförmig angeordnet. Mit derartig dreidimensional ausgebildeten Keramikmodulen kann hinter den Keramikmodulen ein optimal homogener, gleichmässig befeuchteter Luftstrom erreicht werden.

Bei einer bevorzugten Ausführungsvariante der erfindungsgemässen Verdunstervorrichtung bilden mindestens einige der Modulabschnitte des mindestens einen Keramikmoduls einen regulären, vierseitigen, innen hohlen Pyramidenstumpf mit einem Winkel zwischen einer Seitenfläche und der imaginären Grundfläche des Pyramidenstumpfs von 30° bis 90°, vorzugsweise von 45° bis 80°. Ein Pyramidenstumpf mit einem Winkel von 90° könnte man alternativ auch als Quader bezeichnen. Ein solches Keramikmodul hat sich bezüglich der Erreichung eines homogenen, gleichmässig befeuchteten Luftstroms hinter dem Keramikmodul und der Herstellbarkeit als optimal erwiesen.

Bei einer alternativen vorteilhaften Ausführungsvariante der erfindungsgemässen Verdunstervorrichtung bilden mindestens einige der Modulabschnitte des mindestens einen Keramikmoduls eine reguläre, vierseitige, innen hohle Pyramide mit einem Winkel zwischen einer Seitenfläche und der imaginären Grundfläche der Pyramide von 30° bis 75°, vorzugsweise von 45° bis 60°. Ein solches Keramikmodul ist bezüglich der Erreichung eines homogenen, gleichmässig befeuchteten Luftstroms hinter dem Keramikmodul und der Herstellbarkeit ähnlich optimal wie das vorgenannte im Wesentlichen pyramidenstumpfförmige Keramikmodul.

Mit Vorteil sind zumindest einige der Modulabschnitte in einem verjüngteren Teil des mindestens einen Keramikmoduls dicker als in einem weniger verjüngten Teil. Dadurch wird sichergestellt, dass Luft, die in das Keramikmodul strömt und dessen Modulabschnitte durchströmt, hinter dem Keramikmodul einen gleichmässigeren Luftstrom erzeugt. Die in das Keramikmodul strömende Luft wird von den seitlichen Modulabschnitten zur Mitte hin gelenkt, wobei es am Ende des Keramikmoduls, in Luftströmungsrichtung gesehen, zu einem Staudruck kommt, der hinter dem Keramikmodul eine schnellere Strömung von weniger befeuchteter Luft bewirken würde, was aber durch die dickere Ausbildung der Modulabschnitte in diesem Bereich verhindert wird.

Bevorzugt weisen an den Randbereichen des mindestens einen Keramikmoduls angeordnete Modulabschnitte mindestens teilweise einen gestuften Seitenrand auf. Dies ermöglicht es, zwei Keramikmodule an benachbarten gestuften Seitenrändern übereinander oder ineinander greifend anzuordnen, wodurch einerseits mindestens eines der Keramikmodule in mindestens einer Richtung durch das andere Keramikmodul gehalten ist und anderseits keine Luft zwischen den beiden Keramikmodulen durchströmen kann, ohne mindestens eines der Keramikmodule zu durchdringen.

Eine erfindungsgemässe Verdunstervorrichtung mit mindestens einem dreidimensionalen Keramikmodul ist konstruktiv einfacher als eine Verdunstervorrichtung mit zweidimensionalen Keramikplatten (Die Plattendicke wird hier nicht als dritte Dimension angesehen.), die dreidimensional angeordnet werden müssen. Ausserdem kann auf die Luftströmung störende Rahmenteile weitgehend verzichtet werden.

Mit Vorteil greifen bei der erfindungsgemässen Verdunstervorrichtung mindestens zwei Keramikmodule an benachbarten Seitenrändern übereinander oder ineinander. Dadurch ist einerseits mindestens eines der Keramikmodule in mindestens einer Richtung durch das andere Keramikmodul gehalten und kann anderseits keine Luft zwischen den beiden Keramikmodulen durchströmen, ohne mindestens eines der Keramikmodule zu durchdringen.

Bei einer bevorzugten Ausführungsvariante einer erfindungsgemässen Verdunstervorrichtung sind mindestens zwei nebeneinander oder übereinander angeordnete Keramikmodule mittels einer Verbindungseinrichtung miteinander verbunden. Die Verbindungseinrichtung hält die Keramikmodule stabil aneinander.

Mit Vorteil sind Keramikmodule miteinander verbindende Verbindungseinrichtungen so ausgebildet, dass die Verdunstervorrichtung über diese Verbindungseinrichtungen an mindestens einer Wand eines Luftströmungskanals befestigbar ist. Die Verbindungseinrichtungen nehmen so eine Doppelfunktion wahr, wodurch auf zusätzliche die Luftströmung störende Elemente verzichtet werden kann.

Im Folgenden wird die erfindungsgemässe Verdunstervorrichtung unter Bezugnahme auf die beigefügten Zeichnungen anhand von Ausführungsbeispielen detaillierter beschrieben. Es zeigen:
- Fig. 1 -: eine Ansicht eines Ausführungsbeispiels einer erfindungsgemässen Verdunstervorrichtung mit sechs Keramikmodulen in Luftströmungsrichtung;
- Fig. 2 -: eine Schnittansicht der Verdunstervorrichtung gemäss der Linie II-II in Fig. 1;
- Fig. 3 -: eine Schnittansicht der Verdunstervorrichtung gemäss der Linie III-III in Fig. 1;

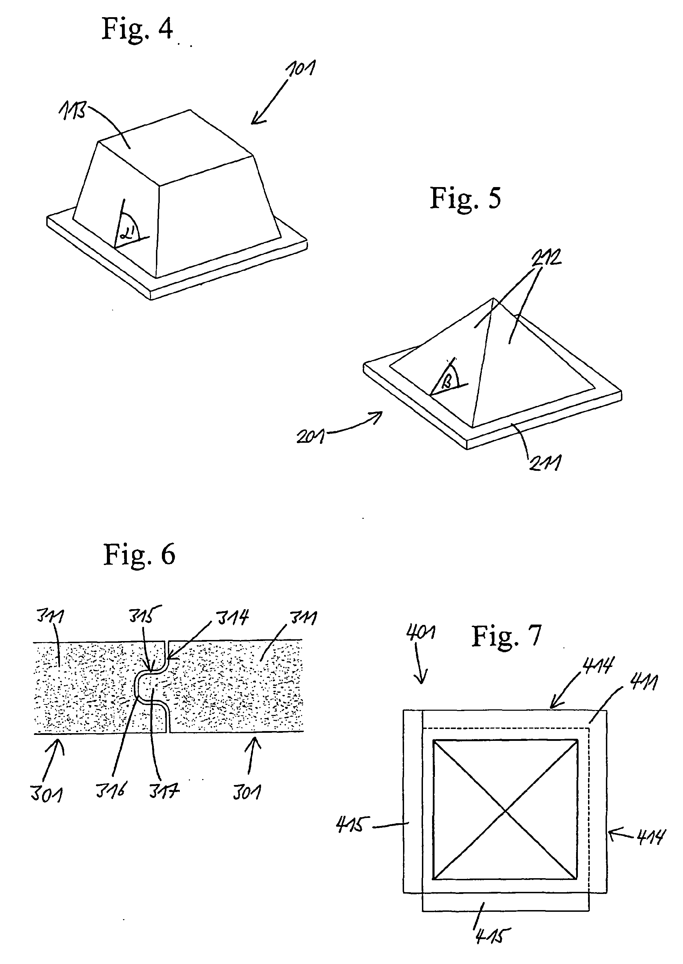

- Fig. 4 -: ein zweites Ausführungsbeispiel eines Keramikmoduls einer erfindungsgemässen Verdunstervorrichtung;
- Fig. 5 -: ein drittes Ausführungsbeispiel eines Keramikmoduls einer erfindungsgemässen Verdunstervorrichtung;
- Fig. 6 -: einen Ausschnitt zweier an benachbarten Seitenrändern ineinander greifender Keramikmodule gemäss einem vierten Ausführungsbeispiel einer erfindungsgemässen Verdunstervorrichtung;
- Fig. 7 -: eine Draufsicht auf ein Keramikmodul gemäss einem fünften Ausführungsbeispiel einer erfindungsgemässen Verdunstervorrichtung;

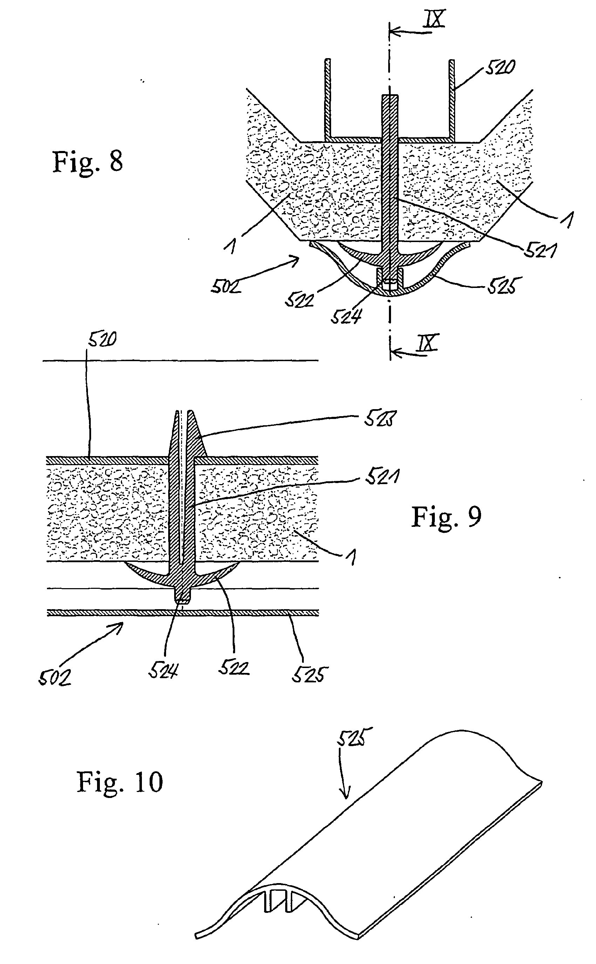

- Fig. 8 -: eine Schnittansicht einer Verbindung zweier benachbarter Keramikmodule mittels Spreizbolzen und Abdeckprofil;
- Fig. 9 -: eine Schnittansicht der Verbindung gemäss der Linie IX-IX in Fig. 8;
- Fig. 10 -: das Abdeckprofil der Verbindung von Fig. 8 und 9 in einer Perspektivansicht;

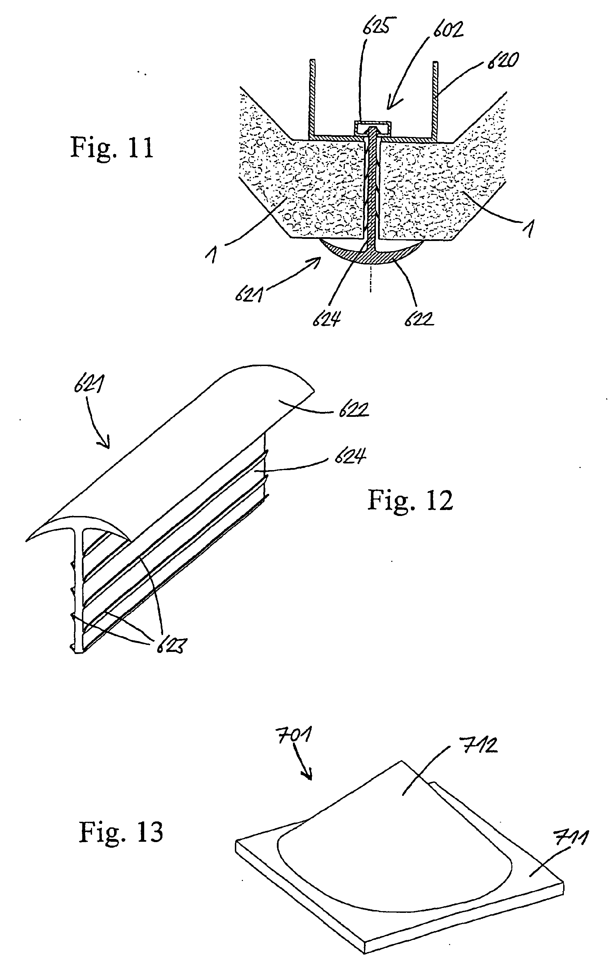

- Fig. 11 -: eine Schnittansicht einer alternativen Verbindung zweier benachbarter Keramikmodule mittels einer Lamellenplatte und eines Schnappprofils;
- Fig. 12 -: das Schnappprofil der Verbindung von Fig. 11 in einer Perspektivansicht;
- Fig. 13 -: ein sechstes Ausführungsbeispiel eines Keramikmoduls einer erfindungsgemässen Verdunstervorrichtung und

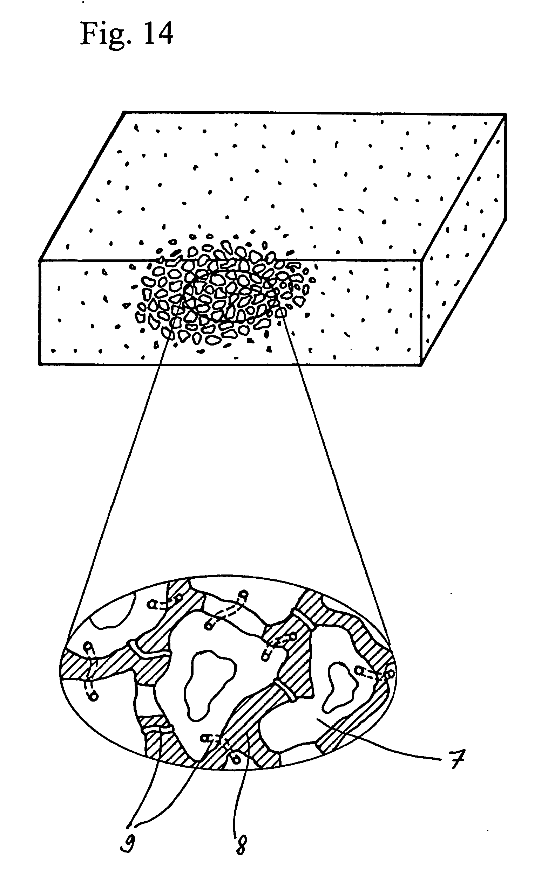

- Fig. 14 -: einen Modulabschnitt eines Keramikmoduls einer erfindungsgemässen Verdunstervorrichtung mit einer stark vergrösserten Detailansicht.

### Figuren 1 bis 3

Das dargestellte Ausführungsbeispiel einer erfindungsgemässen Verdunstervorrichtung 10 umfasst sechs über- und nebeneinander angeordnete Keramikmodule 1, wobei zwei nebeneinander angeordnete Keramikmodule 1 jeweils durch Verbindungseinrichtungen 2 miteinander verbunden sind. Die Keramikmodule 1 bestehen jeweils aus plattenartigen, ineinander übergehenden Modulabschnitten, die einen regulären, vierseitigen, innen hohlen Pyramidenstumpf mit einem zu den Seitenabschnitten 12 des Pyramidenstumpfs angewinkelten Kragen 11 an der Basis bilden. Dies bedeutet, dass sich die Keramikmodule 1 zu einer Seite hin verjüngen, nämlich zum Endabschnitt 13 des Pyramidenstumpfs hin. Der Winkel α zwischen einer Seitenfläche und der imaginären Grundfläche des Pyramidenstumpfs liegt mit Vorteil im Bereich von 30° bis 90°, vorzugsweise im Bereich von 45° bis 80°, wobei bei 90° nicht mehr von einer Verjüngung gesprochen werden kann.

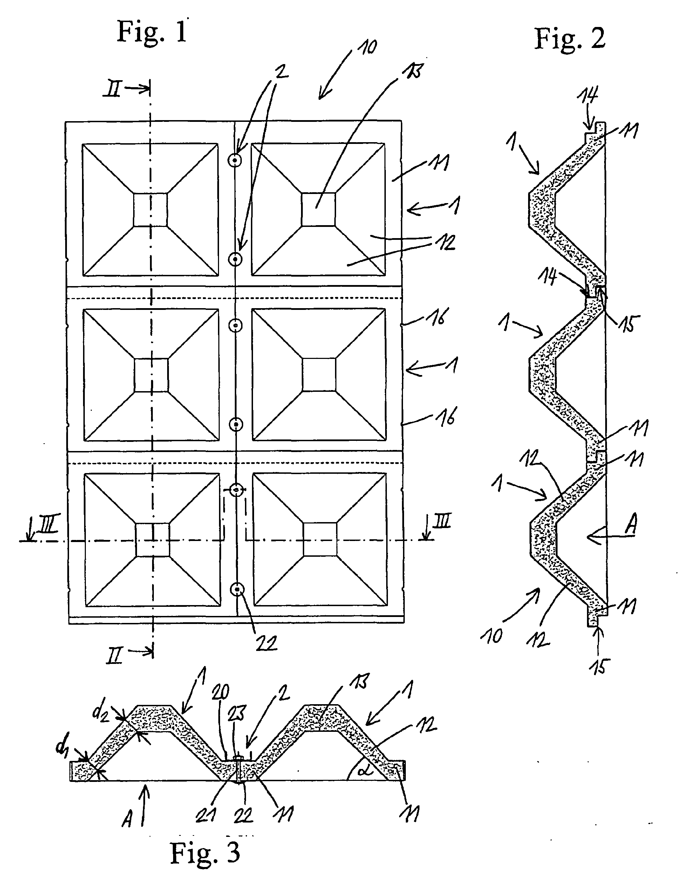

Die Keramikmodule 1 weisen eine offenporige Struktur auf, die in den Fig. 2 und 3 durch die Andeutung einer Vielzahl grober Poren erkennbar ist, durch die ein Luftstrom hindurch strömen kann. Dabei können zunächst Flüssigkeitströpfchen, z.B. Wassertröpfchen, aus dem Luftstrom auf den Wandungen der offenporigen Keramikplatte abgeschieden werden. Diese werden dann später im Luftstrom, der durch die offenporige Keramikplatte strömt, verdunstet und befeuchten diesen. Pro cm sind etwa 2 bis 8 Poren vorhanden. Die Keramikstruktur der offenporigen Keramikmodule 1 weist die Struktur durchlaufende Wandungen auf, die porös sind, was sie hydrophiler macht. Die Dicke der Wandungen liegt beispielsweise im Bereich von 0.1 mm bis 1.5 mm, vorzugsweise im Bereich von 0.2 mm bis 0.6 mm.

Der Endabschnitt 13 eines Keramikmoduls 1 ist im Vergleich zu den Seitenabschnitten 12 dicker ausgebildet. Ausserdem werden die Seitenabschnitte 12 vom Kragen 11 zum Endabschnitt 13 hin kontinuierlich dicker. D.h. Modulabschnitte in einem verjüngteren Teil des Keramikmoduls sind dicker als in einem weniger verjüngten Teil. Die Dicken der plattenartigen Modulabschnitte betragen alle zwischen 2 und 10 cm. Das Verhältnis von d₂:d₁ gemäss Fig. 3 ist mit Vorteil 1,2 bis 3, vorzugsweise 1,4 bis 2. Dadurch wird sichergestellt, dass Luft, die in Richtung des Pfeils A in das Keramikmodul 1 strömt und dessen Modulabschnitte durchströmt, hinter dem Keramikmodul 1 einen gleichmässigeren Luftstrom erzeugt.

Zwei gegenüberliegende Abschnitte des Kragens 11 jedes Keramikmoduls 1 weisen jeweils einen gestuften Seitenrand 14 bzw. 15 auf, der unter bzw. über einen komplementär gestuften Seitenrand 15 bzw. 14 des oben oder unten benachbarten Keramikmoduls 1 greift. Die Keramikmodule 1 halten sich so gegenseitig in Luftströmungsrichtung A, und die auftreffende Luft durchströmt immer mindestens eines der Keramikmodule 1.

Zwei nebeneinander angeordnete Keramikmodule 1 sind jeweils durch zwei Verbindungseinrichtungen 2 fest miteinander verbunden. Die beiden Verbindungseinrichtungen 2 umfassen jeweils eine Schraube 21 mit Schraubenkopf 22 und eine Schraubenmutter 23. Ausserdem erstreckt sich über die ganze Höhe der Verdunstervorrichtung 10 ein U-Profil 20, das durch die auf die Schrauben 21 geschraubten Schraubenköpfe 22 gegen die darunter liegenden Kragenabschnitte 11 der Keramikmodule 1 gepresst wird. Das U-Profil 20 hält so zusammen mit den Schrauben 21 nebeneinander angeordnete Keramikmodule 1 zusammen. Ausserdem kann es gleichzeitig zur Befestigung der Verdunstervorrichtung 10 an den Wänden eines Luftströmungskanals dienen. Zur Aufnahme der Schrauben 21 weisen die Keramikmodule 1 jeweils an zwei gegenüberliegenden Seitenrändern des Kragens 11 jeweils zwei halbzylinderförmige Ausnehmungen 16 auf.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, oder umgekehrt, so wird auf deren Erläuterung in vorangehenden Figurenbeschreibungen Bezug genommen.

### Figur 4

Das hier dargestellte zweite Ausführungsbeispiel eines Keramikmoduls 101 ist ebenfalls im Wesentlichen pyramidenstumpfförmig. Der Winkel α' zwischen einer Seitenfläche und der imaginären Grundfläche des Pyramidenstumpfs und der Endabschnitt 113 sind aber deutlich grösser als beim ersten Ausführungsbeispiel. Ansonsten gilt das zum ersten Ausführungsbeispiel Gesagte.

### Figur 5

Das hier dargestellte dritte Ausführungsbeispiel eines Keramikmoduls 201 besteht aus plattenartigen, ineinander übergehenden Modulabschnitten, die eine reguläre, vierseitige, innen hohle Pyramide mit einem zu den Seitenabschnitten 212 des Pyramidenstumpfs angewinkelten Kragen 211 an der Basis bilden. Das Keramikmodul 201 verjüngt sich somit zu der Pyramidenspitze hin. Der Winkel β zwischen einer Seitenfläche und der imaginären Grundfläche der Pyramide liegt mit Vorteil im Bereich von 30° bis 75°, vorzugsweise im Bereich von 45° bis 60°. Ansonsten gilt das zum ersten Ausführungsbeispiel Gesagte.

### Figur 6

Beim dargestellten Ausschnitt zweier benachbarter Keramikmodule 301 gemäss einem vierten Ausführungsbeispiel greifen diese an den Seitenrändern 314 bzw. 315 der Kragen 311 ineinander. Der Seitenrand 314 ist mit einer Nut 316 und der Seitenrand 315 mit einer Feder 317 versehen, die in die Nut 316 eingreift. Durch das Ineinandergreifen anstatt dem Übereinandergreifen wie beim in den Fig. 1-3 dargestellten ersten Ausführungsbeispiel halten sich die beiden Keramikmodule 301 in Luftströmungsrichtung A gegenseitig besser.

### Figur 7

Das hier gezeigte Keramikmodul 401 gemäss einem fünften Ausführungsbeispiel umfasst einen Kragen 411, der an zwei benachbarten Seitenrändern jeweils mit einer Nut 414 und an den beiden anderen benachbarten Seitenrändern jeweils mit einer Feder 415 versehen ist. Neben und übereinander angeordnete Keramikmodule 401 werden jeweils durch eine in eine Nut 414 eingreifende Feder 415 in Luftströmungsrichtung aneinander gehalten.

### Figuren 8 bis 10

Die zu den in den Fig. 1-3 dargestellten Verbindungseinrichtungen 2 alternativen Verbindungseinrichtungen 502 umfassen jeweils einen Spreizbolzen 521 mit einem Bolzenkopf 522 und einem Widerhaken 523. Die Bolzenköpfe 522 sind jeweils mit einem Zapfen 524 versehen. Der Spreizbolzen 521 hintergreift mit dem Widerhaken 523 ein U-Profil 520, das dem U-Profil 20 des ersten Ausführungsbeispiels entspricht. Der Widerhaken 523 nimmt die Funktion der Schraubenmutter 23 des ersten Ausführungsbeispiels wahr.

Ein auf die Zapfen 524 aufgesetztes Abdeckprofil 525 erstreckt sich über die ganze Höhe der Verdunstervorrichtung und deckt so den Übergang von einem Keramikmodul 1 zum nächsten. Das Abdeckprofil 525 ist vorzugsweise leicht elastisch ausgebildet, so dass es dicht an die Keramikmodule 1 gedrückt werden kann.

### Figuren 11 und 12

Bei diesem Ausführungsbeispiel umfasst eine Verbindungseinrichtung 602 anstelle einer Schraube 21 oder eines Spreizbolzens 521 eine Lamellenplatte 621, die eine Grundplatte 624, eine Deckplatte 622 und auf beiden Seiten der Grundplatte 624 mehrere sich längs erstreckende Lamellen 623 aufweist. Die Grundplatte 624 erstreckt sich über die ganze Höhe der Verdunstervorrichtung zwischen den Rändern zweier benachbarter Keramikmodule 1 bis in ein U-Profil 620 hinein, das dem U-Profil 20 des ersten Ausführungsbeispiels entspricht. Zur Befestigung der Lamellenplatte 621 ist ein Schnappprofil 625 über die letzten Lamellen 623 der Lamellenplatte 621 geschoben. Der Übergang von einem Keramikmodul 1 zum nächsten ist durch die Deckplatte 622 abgedeckt, die vorzugsweise leicht elastisch ist. Die Lamellen 623 stellen sicher, dass keine Luft durch den Spalt zwischen den beiden Keramikmodulen 1 nach hinten durchströmt.

### Figur 13

Das hier dargestellte sechste Ausführungsbeispiel eines Keramikmoduls 701 besteht aus plattenartigen, gebogenen, ineinander übergehenden Modulabschnitten, die einen innen hohlen Kegel mit einem zu den Mantelabschnitten 712 des Kegels angewinkelten Kragen 711 an der Basis bilden. Das Keramikmodul 701 verjüngt sich somit zu der Kegelspitze hin. Der Winkel zwischen dem Kegelmantel und der imaginären Grundfläche der Pyramide liegt mit Vorteil im Bereich von 30° bis 75°, vorzugsweise im Bereich von 45° bis 60°. Ansonsten gilt das zum ersten Ausführungsbeispiel Gesagte.

### Figur 14

Die Modulabschnitte der Keramikmodule der erfindungsgemässen Verdunstervorrichtungen weisen jeweils eine offenporige Struktur aus porösen Keramikwandungen auf. Bei dem dargestellten Ausführungsbeispiel sind zwischen einer Vielzahl offener, grober Poren 7, durch die ein Luftstrom hindurch strömen kann, Keramikwandungen 8 angeordnet. Die Keramikwandungen 8 sind porös ausgebildet, d.h. sie weisen eine Vielzahl kapillarartiger feiner Poren 9 auf, die die Keramikwandungen 8 hydrophiler machen.

Die offenen, groben Poren 7 haben einen Durchmesser im Bereich von vorzugsweise 2 mm bis 20 mm, noch bevorzugter 2 mm bis 5 mm, während die feinen Poren 9 einen Durchmesser im Bereich von vorzugsweise 5 µm bis 1000 µm, noch bevorzugter 50 µm bis 200 µm aufweisen. Die Dicke der Keramikwandungen 8 liegt beispielsweise im Bereich von 0.1 mm bis 1.5 mm, vorzugsweise im Bereich von 0.2 mm bis 0.6 mm. Pro cm² Keramikwandung 8 sind vorzugsweise etwa 10 bis 50 feine Poren 9 vorhanden.

Zu den vorbeschriebenen erfindungsgemässen Verdunstervorrichtungen sind weitere konstruktive Variationen realisierbar. Hier ausdrücklich erwähnt sei noch, dass die Befestigung der Verdunstervorrichtung an Lüftungskanalwänden prinzipiell auch über Befestigungselemente erfolgen könnte, die in Luftströmungsrichtung gesehen an der Rückseite zuhinterst an den Keramikmodulen angebracht sind, beispielsweise an deren Endabschnitten.

## Patentansprüche

1. Verdunstervorrichtung (10) zur Befeuchtung eines durch eine Befeuchtungsstrecke strömenden Luftstroms, wobei die Verdunstervorrichtung sich zumindest grösstenteils über den Strömungsquerschnitt der Befeuchtungsstrecke erstreckt und mindestens ein Keramikmodul (1; 101; 201; 301; 401; 701) zur Befeuchtung des Luftstroms mit einer Befeuchtungsflüssigkeit aufweist, das aus einer offenporigen Struktur aus porösen Keramikwandungen (8) besteht, **dadurch gekennzeichnet, dass** das mindestens eine Keramikmodul (1; 101; 201; 301; 401; 701) plattenartige, ineinander übergehende Modulabschnitte umfasst, die jeweils eine offenporige Struktur aus porösen Keramikwandungen (8) aufweisen und die dreidimensional, d.h. nicht alle in der gleichen Ebene, angeordnet sind.

2. Verdunstervorrichtung (10) nach Anspruch 1, **dadurch gekennzeichnet, dass** mindestens einige der Modulabschnitte des mindestens einen Keramikmoduls (1; 101; 201; 301; 401; 701) so angeordnet sind, dass es sich zu einer Seite hin verjüngt.

3. Verdunstervorrichtung (10) nach Anspruch 1 oder 2, **dadurch gekennzeichnet, dass** mindestens einige der Modulabschnitte des mindestens einen Keramikmoduls (1; 101; 201; 301; 401; 701) pyramiden-, pyramidenstumpf-, kegel- oder kegelstumpfförmig angeordnet sind.

4. Verdunstervorrichtung (10) nach Anspruch 3, **dadurch gekennzeichnet, dass** mindestens einige der Modulabschnitte des mindestens einen Keramikmoduls (1; 101; 301) einen regulären, vierseitigen, innen hohlen Pyramidenstumpf mit einem Winkel (α, α') zwischen einer Seitenfläche und der imaginären Grundfläche des Pyramidenstumpfs von 30° bis 90°, vorzugsweise von 45° bis 80°, bilden.

5. Verdunstervorrichtung (10) nach Anspruch 3, **dadurch gekennzeichnet, dass** mindestens einige der Modulabschnitte des mindestens einen Keramikmoduls (201; 301; 401) eine reguläre, vierseitige, innen hohle Pyramide mit einem Winkel (β) zwischen einer Seitenfläche und der imaginären Grundfläche der Pyramide von 30° bis 75°, vorzugsweise von 45° bis 60°, bilden.

6. Verdunstervorrichtung (10) nach einem der Ansprüche 2 bis 5, **dadurch gekennzeichnet, dass** zumindest einige der Modulabschnitte des mindestens einen Keramikmoduls (1; 101; 201; 301; 401; 701) in einem verjüngteren Teil des Keramikmoduls (1; 101; 201; 301; 401; 701) dicker sind als in einem weniger verjüngten Teil.

7. Verdunstervorrichtung (10) nach einem der Ansprüche 1 bis 6, **dadurch gekennzeichnet, dass** an den Randbereichen des mindestens einen Keramikmoduls (1; 101; 201; 301; 401; 701) angeordnete Modulabschnitte mindestens teilweise einen gestuften Seitenrand (14, 15; 314, 315; 414, 415) aufweisen.

8. Verdunstervorrichtung (10) nach einem der Ansprüche 1 bis 7, **dadurch gekennzeichnet, dass** mindestens zwei Keramikmodule (1; 101; 201; 301; 401; 701) an benachbarten Seitenrändern (14, 15; 314, 315; 414, 415) übereinander oder ineinander greifen.

9. Verdunstervorrichtung (10) nach einem der Ansprüche 1 bis 8, **dadurch gekennzeichnet, dass** mindestens zwei nebeneinander oder übereinander angeordnete Keramikmodule (1; 101; 201; 301; 401; 701) mittels einer Verbindungseinrichtung (2; 502; 602) miteinander verbunden sind.

10. Verdunstervorrichtung (10) nach Anspruch 9, **dadurch gekennzeichnet, dass** Keramikmodule (1; 101; 201; 301; 401; 701) miteinander verbindende Verbindungseinrichtungen (2; 502; 602) so ausgebildet sind, dass die Verdunstervorrichtung (10) über sie an mindestens einer Wand eines Luftströmungskanals befestigbar ist.

## Claims

1. Vaporizer device (10) for humidifying an air stream flowing through a humidification zone, the vaporizer device extending at least for the most part over the flow cross section of the humidification zone and having at least one ceramic module (1; 101; 201; 301; 401; 701) for humidifying the air stream with a humidifying liquid, the said ceramic module consisting of an open-pored structure composed of porous ceramic walls (8), **characterized in that** the at least one ceramic module (1; 101; 201; 301; 401; 701) comprises plate-like module portions which merge one into the other and each have an open-pored structure composed of porous ceramic walls (8) and which are arranged three-dimensionally, that is to say not all in the same plane.

2. Vaporizer device (10) according to Claim 1, **characterized in that** at least some of the module portions of the at least one ceramic module (1; 101; 201; 301; 401; 701) are arranged such that it tapers towards one side.

3. Vaporizer device (10) according to Claim 1 or 2, **characterized in that** at least some of the module portions of the at least one ceramic module (1; 101; 201; 301; 401; 701) are arranged in the form of a pyramid, of a truncated pyramid, of a cone or of a cone frustum.

4. Vaporizer device (10) according to Claim 3, **characterized in that** at least some of the module portions of the at least one ceramic module (1; 101; 301) form a regular, four-sided, internally hollow truncated pyramid with an angle (α, α') between a side face and the imaginary base of the truncated pyramid of 30° to 90°, preferably of 45° to 80°.

5. Vaporizer device (10) according to Claim 3, **characterized in that** at least some of the module portions of the at least one ceramic module (201; 301; 401) form a regular, four-sided, internally hollow pyramid with an angle (β) between a side face and the imaginary base of the pyramid of 30° to 75°, preferably of 45° to 60°.

6. Vaporizer device (10) according to one of Claims 2 to 5, **characterized in that** at least some of the module portions of the at least one ceramic module (1; 101; 201; 301; 401; 701) are thicker in a more tapered part of the ceramic module (1; 101; 201; 301; 401; 701) than in a less tapered part.

7. Vaporizer device (10) according to one of Claims 1 to 6, **characterized in that** module portions arranged at the marginal regions of the at least one ceramic module (1; 101; 201; 301; 401; 701) have at least partially a stepped side margin (14, 15; 314, 315; 414, 415).

8. Vaporizer device (10) according to one of Claims 1 to 7, **characterized in that** at least two ceramic modules (1; 101; 201; 301; 401; 701) engage one above the other or one in the other at adjacent side margins (14, 15; 314, 315; 414, 415).

9. Vaporizer device (10) according to one of Claims 1 to 8, **characterized in that** at least two ceramic modules (1; 101; 201; 301; 401; 701) arranged next to one another or one above the other are connected to one another by means of a connecting device (2; 502; 602).

10. Vaporizer device (10) according to Claim 9, **characterized in that** connecting devices (2; 502; 602) connecting ceramic modules (1; 101; 201; 301; 401; 701) to one another are designed such that the vaporizer device (10) can be fastened via them to at least one wall of an air flow duct.

## Revendications

1. Dispositif évaporateur (10) pour l'humidification d'un flux d'air s'écoulant à travers une voie d'humidification, le dispositif évaporateur s'étendant au moins en grande partie sur toute la section transversale de la voie d'humidification et comprenant au moins un module en céramique (1; 101; 201; 301; 401; 701) pour l'humidification du flux d'air par un liquide humidificateur, le module étant constitué d'une structure à alvéoles ouvertes faite de parois céramiques poreuses (8),
**caractérisé en ce que** ledit au moins un module en céramique (1; 101; 201; 301; 401; 701) comprend des sections de module en forme de plaques, se rejoignant les unes les autres, qui comportent chacune une structure à alvéoles ouvertes faite de parois céramiques poreuses (8), et qui sont disposées en trois dimensions, c'est-à-dire qu'elles ne sont pas disposées toutes dans le même plan.

2. Dispositif évaporateur (10) selon la revendication 1, **caractérisé en ce que** quelques unes au moins des sections de module dudit au moins un module en céramique (1; 101; 201; 301; 401; 701) sont disposées de manière telle que celui-ci se resserre vers un côté.

3. Dispositif évaporateur (10) selon la revendication 1 ou 2, **caractérisé en ce que** quelques unes au moins des sections de module dudit au moins un module en céramique (1; 101; 201; 301; 401; 701) sont disposées en forme de pyramide, de pyramide tronquée, de cône ou de cône tronqué.

4. Dispositif évaporateur (10) selon la revendication 3, **caractérisé en ce que** quelques unes au moins des sections de module dudit au moins un module en céramique (1; 101; 301) forment une pyramide tronquée régulière, quadrilatérale, intérieurement creuse, présentant un angle (α, α') entre une face latérale et la base imaginaire de la pyramide tronquée, qui est compris entre 30° et 90°, de préférence entre 45° et 80°.

5. Dispositif évaporateur (10) selon la revendication 3, **caractérisé en ce que** quelques unes au moins des sections de module dudit au moins un module en céramique (201; 301; 401) forment une pyramide régulière, quadrilatérale, intérieurement creuse, ayant un angle (β) entre une face latérale et la base imaginaire de la pyramide, qui est compris entre 30° et 75°, de préférence entre 45° et 60°.

6. Dispositif évaporateur (10) selon l'une des revendications 2 à 5, **caractérisé en ce que** quelques unes au moins des sections de module dudit au moins un module en céramique (1; 101; 201; 301; 401; 701) sont plus épaisses, dans une partie plus étroite du module en céramique (1; 101; 201; 301; 401; 701), que dans une partie moins étroite.

7. Dispositif évaporateur (10) selon l'une des revendications 1 à 6, **caractérisé en ce que** des sections de module disposées le long des parties marginales dudit au moins un module en céramique (1; 101; 201; 301; 401; 701) présentent, en partie au moins, un bord latéral étagé (14, 15; 314, 315; 414, 415).

8. Dispositif évaporateur (10) selon l'une des revendications 1 à 7, **caractérisé en ce qu'**au moins deux modules en céramique (1; 101; 201; 301; 401; 701) s'emboîtent les unes sur les autres ou les unes dans les autres par leurs bords latéraux contigus (14, 15; 314, 315; 414,415).

9. Dispositif évaporateur (10) selon l'une des revendications 1 à 8, **caractérisé en ce qu'**au moins deux modules en céramique (1; 101; 201; 301; 401; 701) disposés l'un à côté de l'autre ou l'un au-dessus de l'autre sont reliés l'un à l'autre au moyen d'un dispositif de liaison (2; 502; 602)

10. Dispositif évaporateur (10) selon la revendication 9, **caractérisé en ce que** les dispositifs de liaison (2; 502; 602) reliant des modules en céramique (1; 101; 201; 301; 401; 701) entre eux sont configurés de telle façon que le dispositif évaporateur (10) puisse être fixé, par l'intermédiaire de ceux-ci, à au moins une paroi d'un canal d'écoulement d'air.
